# EUROPÄISCHE PATENTSCHRIFT

(11) **EP 3 451 888 B1**
(45) Veröffentlichungstag und Bekanntmachung des Hinweises auf die Patenterteilung: **29.06.2022**
(21) Anmeldenummer: 16720428.8
(22) Anmeldetag: 04.05.2016
(51) Int. Cl.: A47L 11/30, B60L 53/16, A47L 11/40, B60L 53/31, B60L 53/36

(54) **BODENBEHANDLUNGSSYSTEM**
FLOOR TREATMENT SYSTEM
SYSTÈME DE TRAITEMENT DES SOLS

(43) Veröffentlichungstag der Anmeldung: 13.03.2019
(73) Patentinhaber: Alfred Kärcher SE & Co. KG, 71364 Winnenden (DE)
(72) Erfinder: BLUMHARDT, Heiko, 71686 Remseck (DE); PFISTER, Barbara, 71554 Weissach im Tal (DE); WALLER, Christoph, 71409 Schwaikheim (DE); NONNENMANN, Frank, 73614 Schorndorf (DE)
(74) Vertreter: DTS Patent- und Rechtsanwälte Schnekenbühl und Partner mbB
(86) Internationale Anmeldenummer: PCT/EP2016/060068
(87) Internationale Veröffentlichungsnummer: WO 2017/190784

(56) Entgegenhaltungen:
- EP-A1- 1 058 958
- EP-A2- 1 430 826
- EP-A2- 2 229 857
- WO-A1-2013/100833

## Beschreibung

Die Erfindung betrifft ein Bodenbehandlungssystem nach dem Oberbegriff von Anspruch 1.

Bei einem derartigen Bodenbehandlungssystem kann der Bodenbehandlungsvorrichtung über die Anschlusselemente eine zu deren Betrieb erforderliche verbrauchbare Komponente zugeführt werden. Hierbei handelt es sich zum Beispiel um elektrische Energie, die einer wiederaufladbaren Batterie der Bodenbehandlungsvorrichtung zugeführt wird. Denkbar ist auch die Zufuhr einer Flüssigkeit, insbesondere einer Reinigungsflüssigkeit wie zum Beispiel Wasser. Dementsprechend kann es sich bei der Bodenbehandlungsvorrichtung um eine Bodenreinigungsvorrichtung handeln mit mindestens einem Reinigungsaggregat, unter dessen Wirkung Schmutz von einer zu reinigenden Bodenfläche abgelöst werden kann, wobei die Bodenfläche zur Steigerung der Reinigungswirkung mit der Reinigungsflüssigkeit beaufschlagbar ist.

Alternativ oder ergänzend können Anschlusselemente für einen Signalaustausch zwischen der Andockstation und der Bodenbehandlungsvorrichtung vorgesehen sein.

Die mobile Bodenbehandlungsvorrichtung kann selbstfahrend und selbstlenkend sein, um eine autonome Behandlung der Bodenfläche zu ermöglichen. Alternativ oder ergänzend kann die Bodenbehandlungsvorrichtung durch eine Bedienperson handgeführt und optional mit einem Antrieb für ein Fahrwerk versehen sein.

Zur Einnahme der Andockstellung bei einem herkömmlichen Bodenbehandlungssystem ist vorgesehen, dass die Bodenbehandlungsvorrichtung längs einer definierten Andockrichtung an die Andockstation andockt. Bewegt sich die Bodenbehandlungsvorrichtung längs der Andockrichtung, fluchten die Anschlusselemente und können beim Andocken miteinander koppeln.

Die WO 2013/100833 A1 beschreibt eine Kontaktanordnung einer Ladeeinrichtung für ein robotisches Gartenwerkzeug. Die Kontaktanordnung ist ausgebildet, ein Kontaktelement des Gartenwerkzeugs in einem Ladebetrieb zu kontaktieren. Die Kontaktanordnung umfasst ein Kontaktglied, das eine Mehrzahl von Verbindungspunkten umfasst, um eine Mehrzahl von Kontaktpunkten zwischen dem Kontaktglied und dem Kontaktelement bereitzustellen. Das Kontaktglied ist ausgebildet, schwenkbar und verschiebbar relativ zu einem Körperabschnitt der Ladeeinrichtung zu sein. Die Kontaktanordnung umfasst ein Vorspannglied, das ausgebildet ist, das Kontaktglied und den Körperabschnitt zu verbinden, um so das Kontaktglied in Richtung des Kontaktelementes während des Ladebetriebs vorzuspannen.

Eine automatische Ladeeinrichtung für eine autonome Reinigungsvorrichtung ist in der EP 1 430 826 A2 beschrieben. Eine Ladeeinheit ist innenseitig in der Reinigungsvorrichtung angeordnet und kann selektiv ausgefahren werden. Dadurch ist die Reinigungsvorrichtung vor Beschädigung infolge einer Kollision mit einem Objekt während einer Vorwärtsbewegung geschützt.

Aufgabe der vorliegenden Erfindung ist es, ein Bodenbehandlungssystem der eingangs genannten Art bereitzustellen, bei dem das Andocken der Bodenbehandlungsvorrichtung an die Andockstation erleichtert ist.

Diese Aufgabe wird durch ein erfindungsgemäßes Bodenbehandlungssystem mit den Merkmalen von Anspruch 1 gelöst.

In die Erfindung fließt der Gedanke mit ein, dass ein Andocken der Bodenbehandlungsvorrichtung an die Andockstation dadurch erschwert sein kann, dass eine vorgegebene Andockrichtung nicht eingehalten ist und die Anschlusselemente nur unzureichend zueinander ausgerichtet sind. Dies kann dazu führen, dass die Anschlusselemente nicht oder nur unzuverlässig miteinander koppeln oder gar beschädigt werden, wodurch das Andocken der Bodenbehandlungsvorrichtung scheitert. Die vorliegende Erfindung bietet demgegenüber den Vorteil, dass mindestens eine Anschlusseinheit mit mindestens einem jeweiligen Anschlusselement an der Andockstation und/oder an der Bodenbehandlungsvorrichtung vorgesehen ist. Die mindestens eine Anschlusseinheit ist insbesondere positionsveränderlich an der Andockstation oder an der Bodenbehandlungsvorrichtung gehalten. Bewegt sich die Bodenbehandlungsvorrichtung beim Andocken nicht exakt längs der Andockeinrichtung, erlaubt dies eine Bewegung der mindestens einen Anschlusseinheit. Dadurch ist die Möglichkeit gegeben, dass die Anschlusselemente selbst dann miteinander koppeln können, wenn die Bodenbehandlungsvorrichtung nicht exakt die Andockrichtung einnimmt. Das Andocken der Bodenbehandlungsvorrichtung wird erleichtert. Die vorliegende Erfindung erweist sich als besonders vorteilhaft bei einer selbstfahrenden und selbstlenkenden Bodenbehandlungsvorrichtung. Bei derartigen Bodenbehandlungsvorrichtungen ist typischerweise ein hoher Aufwand an die Sensorik erforderlich, um die Bodenbehandlungsvorrichtung in definierter Andockrichtung anzudocken. Dieser Aufwand kann bei dem erfindungsgemäßen Bodenbehandlungssystem erheblich reduziert werden.

Sofern nachfolgend nicht ausdrücklich gegenteiliges gesagt wird, ist mit der "Anschlusseinheit" die an der Andockstation oder an der Bodenbehandlungsvorrichtung positionsveränderlich gehaltene Anschlusseinheit gemeint.

Erfindungsgemäß umfassen die Andockstation und die Bodenbehandlungsvorrichtung jeweils eine, mindestens ein Anschlusselement aufweisende Anschlusseinheit, wobei die Anschlusseinheiten in der Andockstellung der Bodenbehandlungsvorrichtung an- oder ineinander fügbar sind. Zumindest eine der Anschlusseinheiten ist positionsveränderlich an der Andockstation oder an der Bodenbehandlungsvorrichtung gehalten.

Erfundungsgemäß umfassen die Anschlusselemente der Andockstation und der Bodenbehandlungsvorrichtung Anschlusselemente an einer Zufuhrleitung der Andockstation und an einer Befüllleitung der Bodenbehandlungsvorrichtung, die dichtend miteinander verbindbar sind, wobei die Bodenbehandlungsvorrichtung einen Vorratsbehälter für eine Flüssigkeit aufweist, der in der Andockstellung befüllbar ist. In der Andockstellung ist durch die Zufuhrleitung und die Befüllleitung eine Strömungsverbindung von der Andockstation zum Befüllen des Vorratsbehälters gebildet. An den Anschlusselementen sind vorzugsweise selbstöffnende und selbstsperrende Ventile angeordnet.

Von Vorteil ist es, wenn die mindestens eine Anschlusseinheit zumindest in einer Ebene verschiebbar und um eine Achse quer und insbesondere senkrecht zur Ebene schwenkbar an der Andockstation oder der Bodenbehandlungsvorrichtung gehalten ist. Dabei ist vorzugsweise eine schwimmende Lagerung der Anschlusseinheit mittels einer Halteeinrichtung an der Andockstation oder der Bodenbehandlungsvorrichtung vorgesehen. Im Gebrauchszustand ist das Bodenbehandlungssystem auf einer Aufstellfläche positioniert und definiert eine mit der Aufstellfläche zusammenfallende Berührebene. Günstigerweise ist die Anschlusseinheit zumindest in der Ebene parallel zur Berührebene positionsveränderlich, insbesondere verschiebbar und um eine Achse quer zur Berührebene schwenkbar.

Günstig ist es, wenn die mindestens eine Anschlusseinheit mit zumindest zwei Freiheitsgraden der Translation, vorzugsweise drei Freiheitsgraden der Translation, positionsveränderlich gehalten ist. Beispielsweise kann die mindestens eine Anschlusseinheit in der vorstehend genannten Ebene parallel zur Berührebene translatorisch beweglich sein, bevorzugt auch in einer Richtung quer und insbesondere senkrecht zur Ebene.

Von Vorteil ist es, wenn die mindestens eine Anschlusseinheit mit zumindest einem Freiheitsgrad der Rotation, vorzugsweise drei Freiheitsgraden der Rotation, positionsveränderlich gehalten ist. Beispielsweise ist die Anschlusseinheit um eine Achse quer und insbesondere zur vorstehend genannten Ebene schwenkbar gehalten sowie um Schwenkachsen, die eine Ebene parallel zur Berührebene aufspannen und quer, insbesondere senkrecht zueinander ausgerichtet sind.

Jede Anschlusseinheit, darauf wird nachfolgend noch eingegangen, kann mehr als ein Anschlusselement der Andockstation oder der Bodenbehandlungsvorrichtung aufweisen.

Eine der beiden Anschlusseinheiten greift in der Andockstellung der Bodenbehandlungsvorrichtung vorzugsweise formschlüssig in die andere Anschlusseinheit ein. Zum einen ist dadurch sichergestellt, dass die Anschlusseinheiten in korrekter Weise ineinander gefügt sind, so dass die Anschlusselemente zuverlässig miteinander koppeln. Zum anderen können die Anschlusselemente vorzugsweise vor äußeren Einwirkungen geschützt werden, beispielsweise wenn sie in einem jeweiligen Gehäuse der Anschlusseinheiten aufgenommen sind.

Bei einer vorteilhaften Ausführungsform des Bodenbehandlungssystems ist vorgesehen, dass eine der Anschlusseinheiten unbeweglich an der Bodenbehandlungsvorrichtung oder an der Andockstation festgelegt ist. Dementsprechend ist eine positionsveränderliche und eine unbeweglich festgelegte Anschlusseinheit vorgesehen.

Als günstig erweist es sich, wenn die Anschlusseinheit an der Andockstation positionsveränderlich gehalten ist und wenn die Anschlusseinheit an der Bodenbehandlungsvorrichtung unbeweglich festgelegt ist.

Die mindestens eine Anschlusseinheit weist vorzugsweise ein Gehäuse auf, in dem das mindestens eine Anschlusselement der Andockstation oder der Bodenbehandlungsvorrichtung aufgenommen ist. Im Gehäuse ist das Anschlusselement besser geschützt, zum Beispiel vor äußeren Einwirkungen oder vor Zugriff durch einen Benutzer. Das Gehäuse kann, zumindest abschnittsweise, auch mindestens eine Leitung aufnehmen, an dem das Anschlusselement angeordnet ist. Dabei kann es sich um eine Fluidleitung oder um eine elektrische Leitung handeln.

Zum Haltern der mindestens einen Anschlusseinheit an der Andockstation oder an der Bodenbehandlungsvorrichtung umfasst das Bodenbehandlungssystem günstigerweise eine Halteeinrichtung. Die Halteeinrichtung mit daran gehalterter positionsveränderlicher Anschlusseinheit ist zum Beispiel in eine Öffnung eines Gehäuses der Andockstation oder der Bodenbehandlungsvorrichtung eingesetzt.

Bei einer vorteilhaften Ausführungsform des Bodenbehandlungssystems weist die Halteeinrichtung mindestens ein Rückstellelement auf, entgegen dessen Rückstellkraft die mindestens eine Anschlusseinheit beim Andocken der Bodenbehandlungsvorrichtung an die Andockstation von einer Grundstellung, die die Anschlusseinheit bei nicht angedockter Bodenbehandlungsvorrichtung einnimmt, ausrückbar ist. Über das mindestens eine Rückstellelement kann sichergestellt werden, dass die Anschlusseinheit beim Abdocken wieder in die Grundstellung überführt wird. Zudem kann beim Andocken eine Rückstellkraft auf die Anschlusseinheit ausgeübt werden, die das Fügen der Anschlusselemente erleichtert.

Das mindestens eine Rückstellelement ist günstigerweise ein Vorspannelement, das die mindestens eine Anschlusseinheit mit einer Vorspannkraft in der Grundstellung vorspannt, wobei an der Halteeinrichtung und an der Anschlusseinheit bevorzugt zusammenwirkende Anschlagelemente angeordnet sind, über die sich die Anschlusseinheit in der Grundstellung an der Halteeinrichtung abstützt. Über das mindestens eine Vorspannelement kann die Anschlusseinheit in Richtung auf die und in der Grundstellung vorgespannt sein, wobei zusammenwirkende Anschlagelemente der Halteeinrichtung und der Anschlusseinheit die Einnahme einer definierten Grundstellung sicherstellen. Die Vorspannkraft über das mindestens eine Vorspannelement wirkt insbesondere in Richtung der jeweils anderen Komponente des Bodenbehandlungssystem, d. h. bei Anordnung der Anschlusseinheit an der Andockstation in Richtung der Bodenbehandlungsvorrichtung und damit entgegen deren Andockbewegung oder bei Anordnung der Anschlusseinheit an der Bodenbehandlungsvorrichtung in Richtung der Andockstation und damit in Richtung der Andockbewegung.

Mindestens ein Anschlagelement kann vorzugsweise an ein Gehäuse der mindestens einen Anschlusseinheit angeformt sein, um eine konstruktiv einfache Ausgestaltung und kompakte Bauform zu erzielen.

Das mindestens eine Rückstellelement ist vorzugsweise elastisch verformbar ausgestaltet. Beim Andocken wirkt auf das Rückstellelement eine sich durch die Andockbewegung ergebende Kraft, entgegen der die Rückstell- und insbesondere Vorspannkraft des Rückstellelementes wirksam ist.

Das mindestens eine Rückstellelement ist oder umfasst vorzugsweise eine Schraubenfeder, die insbesondere auf Zug beansprucht sein kann.

Eine vorteilhafte Ausführungsform des erfindungsgemäßen Bodenbehandlungssystems kann vorsehen, dass die mindestens eine Anschlusseinheit an der Halteeinrichtung hängend gelagert ist. Die hängende Lagerung ist vorzugsweise so ausgestaltet, dass die Anschlusseinheit zumindest in einer Ebene parallel zur Berührebene verschiebbar und um eine Achse quer zur Berührebene schwenkbar ist. Besonders bevorzugt ist die Anschlusseinheit um drei Freiheitsgrade der Translation und drei Freiheitsgrade der Rotation positionsveränderlich gehalten.

Bei der hängenden Lagerung umfasst oder bildet die Halteeinrichtung günstigerweise einen die mindestens eine Anschlusseinheit einfassenden Rahmen, wobei die Anschlusseinheit mittels elastischer Elemente, die an einem Gehäuse der Anschlusseinheit angreifen, relativ zum Rahmen verspannt ist. Die elastischen Elemente sind insbesondere die genannten Rückstellelemente und besonders bevorzugt Vorspannelemente.

Als vorteilhaft erweist es sich, wenn die Halteeinrichtung eine Mehrzahl von Haltegliedern direkt oder indirekt an der Andockstation oder an der Bodenbehandlungsvorrichtung festgelegt aufweist, wobei eine Mehrzahl von Rückstellelementen vorgesehen ist, die an der mindestens einen Anschlusseinheit angreifen und diese relativ zu den Haltegliedern verspannen. Eine derartige Ausgestaltung kann zum Beispiel bei der bereits genannten hängenden Lagerung der Anschlusseinheit vorgesehen sein.

Die Rückstellelemente sind vorteilhafterweise die mindestens eine Anschlusseinheit umgebend positioniert. Beispielsweise sind zumindest drei und bevorzugt vier Rückstellelemente vorgesehen, die an einem Außenumfang der Anschlusseinheit angeordnet sind.

Von Vorteil ist es, wenn an einem Gehäuse der mindestens einen Anschlusseinheit angeformte Halteglieder vorgesehen sind, an denen die Rückstellelemente angreifen. Die Halteglieder bilden zum Beispiel Ösen, an denen die Rückstellelemente festgelegt sind.

Als vorteilhaft erweist es sich, wenn die Halteeinrichtung einen Rahmen umfasst oder bildet, an dem die Halteglieder angeordnet sind und der eine Öffnung einfasst, in der die mindestens eine Anschlusseinheit angeordnet ist oder welche Öffnung die mindestens eine Anschlusseinheit durchgreift. In der Öffnung kann die Anschlusseinheit hängend gelagert sein.

Als günstig erweist es sich, wenn die mindestens eine Anschlusseinheit in einer Grundstellung, die die Anschlusseinheit bei nicht angedockter Bodenbehandlungsvorrichtung einnimmt, über den Rahmen und eine Stirnseite der Andockstation oder der Bodenbehandlungsvorrichtung in Richtung der Bodenbehandlungsvorrichtung bzw. der Andockstation hervorragt. Dabei ist das mindestens eine Anschlusselement vorzugsweise an oder im Bereich einer Stirnseite der hervorragenden Anschlusseinheit angeordnet. Das Anschlusselement kann auf diese Weise beim Ankoppeln leichter erreicht werden. An einer der Bodenbehandlungsvorrichtung bzw. der Andockstation abgewandten Seite können am Rahmen die Rückstellelemente angreifen und zusammenwirkende Anschlagelemente an der Anschlusseinheit und am Rahmen zum Abstützen der Anschlusseinheit zusammenwirken.

Es kann vorgesehen sein, dass die Andockstation oder die Bodenbehandlungsvorrichtung ein Gehäuse mit einer Gehäuseöffnung aufweist und dass der Rahmen in die Gehäuseöffnung eingesetzt ist.

Bei einer vorteilhaften Ausführungsform des Bodenbehandlungssystems können die Andockstation und die Bodenbehandlungsvorrichtung jeweils mindestens zwei Anschlusselemente umfassen, wobei die mindestens eine positionsveränderliche Anschlusseinheit zwei oder mehr Anschlusselemente aufweist. Die zwei oder mehr Anschlusselemente sind dadurch positionsveränderlich an der Andockstation bzw. der Bodenbehandlungsvorrichtung angeordnet, und selbst bei einer Mehrzahl von korrespondierenden Anschlusselementen ist das Andocken der Bodenbehandlungsvorrichtung erleichtert.

Die Anschlusselemente sind beispielsweise seitlich nebeneinander an der mindestens einen Anschlusseinheit positioniert.

Von Vorteil ist es, wenn die mindestens eine Anschlusseinheit einem jeweiligen Anschlusselement zugeordnet einen Anschlussbereich aufweist, wobei die Anschlussbereiche durch mindestens ein Trennelement voneinander getrennt sind. Es kann vorgesehen sein, dass zum Beispiel an einem die Anschlusselemente aufnehmenden Gehäuse Vertiefungen angeordnet sind, in denen ein jeweiliges Anschlusselement positioniert ist. Das Trennelement kann die Vertiefungen voneinander trennen. Das Trennelement ermöglicht zum Beispiel einen Schutz eines elektrischen Anschlusselementes, wenn an einem anderen Anschlusselement beispielsweise eine Flüssigkeit unbeabsichtigterweise austritt.

Das mindestens eine Trennelement ist günstigerweise eine Trennwand zwischen den Anschlussbereichen oder umfasst eine solche.

Als vorteilhaft erweist es sich, wenn die mindestens eine Anschlusseinheit alle Anschlusselemente aufweist, über die eine verbrauchbare Komponente von der Andockstation an die Bodenbehandlungsvorrichtung zuführbar ist.

Vorteilhafterweise umfassen die Anschlusselemente der Andockstation und der Bodenbehandlungsvorrichtung ferner zumindest eines der Folgenden:
- Anschlusselemente einer elektrischen Energieversorgung, die elektrisch miteinander koppeln, um der Bodenbehandlungsvorrichtung elektrische Energie von der Andockstation zuzuführen. Mindestens eine wiederaufladbare Batterie der Bodenbehandlungsvorrichtung kann dadurch in deren Andockstellung geladen werden. Die Anschlusselemente umfassen insbesondere einen Stecker und eine Buchse.
- Anschlusselemente für eine elektrische Signalübertragung, die elektrisch miteinander koppeln zum Übermitteln von Schalt- und/oder Spannungssignalen zwischen der Andockstation und der Bodenbehandlungsvorrichtung. Alternativ zur Zufuhr einer verbrauchbaren Komponente kann eine Übertragung mindestens eines Signals zwischen denselben wünschenswert sein. Zu diesem Zweck kann das Bodenbehandlungssystem korrespondierende Anschlusselemente aufweisen, die zum Beispiel als Stecker und als Buchse ausgestaltet sind. Die Anschlusselemente können mehrpolig sein, und über verschiedene Pole können unterschiedliche Signale übertragen werden.

Vorteilhafterweise umfasst das Bodenbehandlungssystem alle der vorstehend genannten Anschlusselemente, wobei die Anschlusselemente der Zufuhrleitung und der Befüllleitung zwischen den Anschlusselementen der elektrischen Energieversorgung und den Anschlusselementen für die elektrische Signalübertragung positioniert sind. Günstig ist die räumliche Trennung der Anschlusselemente der elektrischen Spannungsversorgung einerseits und der elektrischen Signalübertragung andererseits, um mögliche Störungen von Schalt- und/oder Spannungssignalen durch die Energieversorgung zu vermeiden.

Vorteilhafterweise umfasst das Bodenbehandlungssystem eine Ausrichteinrichtung zum Ausrichten der mindestens einen Anschlusseinheit an der Andockstation oder an der Bodenbehandlungsvorrichtung zum jeweiligen mindestens einen Anschlusselement an der Bodenbehandlungsvorrichtung bzw. an der Andockstation. Zusätzlich zur positionsveränderlichen Halterung der Anschlusseinheit kann die Ausrichteinrichtung vorgesehen sein, damit sich die Anschlusselemente beim Andocken der Bodenbehandlungsvorrichtung besser finden und noch einfacher miteinander koppeln können.

Für eine konstruktiv einfache Ausgestaltung und zuverlässige Ausrichtung ist es günstig, wenn die Ausrichteinrichtung an einer Anschlusseinheit angeordnet oder von dieser gebildet ist. Insbesondere kann es sich dabei um eine Anschlusseinheit der Bodenbehandlungsvorrichtung handeln, die mindestens ein Anschlusselement derselben aufnimmt und vorzugsweise an dieser unbeweglich festgelegt ist.

Die Ausrichteinrichtung weist vorteilhafterweise eine im Winkel zu einer Andockrichtung ausgerichtete Zentrierschräge auf. Durch die Zentrierschräge kann eine konische oder trichterförmige Verjüngung vorgesehen sein, die es beispielsweise der positionsveränderlichen Anschlusseinheit erlaubt sich relativ zu den weiteren, anzudockenden Anschlusselementen auszurichten.

Günstig ist es, wenn das mindestens eine Anschlusselement der mindestens einen positionsveränderlichen Anschlusseinheit hinter dessen Stirnseite zurückbleibt, welche Stirnseite der Bodenbehandlungsvorrichtung oder der Andockstation zugewandt ist. Das Anschlusselement ist dadurch besser geschützt, beispielsweise vor Stößen gegen die Stirnseite der Anschlusseinheit.

Die Bodenbehandlungsvorrichtung kann bei einer vorteilhaften Ausführungsform des Bodenbehandlungssystems selbstfahrend und selbstlenkend sein, um eine autonome Behandlung einer Bodenfläche zu ermöglichen.

Alternativ oder ergänzend kann vorgesehen sein, dass die Bodenbehandlungsvorrichtung handgeführt ist und von einer Bedienperson über die Bodenfläche geführt werden kann. Dabei kann es sich um eine Aufsteh- oder Aufsitz-Vorrichtung (ride on) handeln oder um eine Nachlauf-Vorrichtung (walk behind).

Je nach Betriebsart kann vorgesehen sein, das die Bodenbehandlungsvorrichtung selbstfahrend und selbstlenkend oder handgeführt betrieben wird.

Die Bodenbehandlungsvorrichtung kann vorteilhafterweise eine Bodenreinigungsvorrichtung sein und mindestens ein Reinigungsaggregat zum Reinigen einer Bodenfläche aufweisen. Beispielsweise umfasst das Reinigungsaggregat ein drehend antreibbares walzenförmiges oder tellerförmiges Reinigungswerkzeug. Weiter kann die Bodenbehandlungsvorrichtung einen Vorratsbehälter für eine verbrauchbare Komponente in Form einer Reinigungsflüssigkeit umfassen. Alternativ oder ergänzend kann mindestens eine wiederaufladbare Batterie für eine verbrauchbare Komponente in Form elektrischer Energie vorgesehen sein.

Die Bodenreinigungsvorrichtung kann insbesondere eine Scheuersaugmaschine sein.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine Seitenansicht eines erfindungsgemäßen Bodenbehandlungs-systems, umfassend eine Andockstation und eine Bodenbehandlungsvorrichtung in einer Andockstellung an der Andockstation;
- Figur 2:: eine perspektivische vereinfachte Teildarstellung der Andockstation aus Figur 1, mit einer Anschlusseinheit und mehreren Anschlusselementen der Andockstation, wobei eine Halteeinrichtung zum Haltern der Anschlusseinheit an der Andockstation dargestellt ist;
- Figur 3:: eine Frontansicht der Anschlusseinheit und der Halteeinrichtung aus Figur 2;
- Figur 4:: eine perspektivische Rückansicht der Anschlusseinheit und der Halteeinrichtung aus Figur 2;
- Figur 5:: eine perspektivische vereinfachte Teildarstellung einer Vorderseite der Bodenbehandlungsvorrichtung aus Figur 1, wobei eine Anschlusseinheit mit mehreren Anschlusselementen der Bodenbehandlungsvorrichtung dargestellt ist; und
- Figur 6:: eine Ansicht entsprechend Figur 5, wobei die Anschlusseinheit der Andockstation mit der Anschlusseinheit der Bodenbehandlungsvorrichtung zusammengefügt ist, unter Auslassung der Halteeinrichtung.

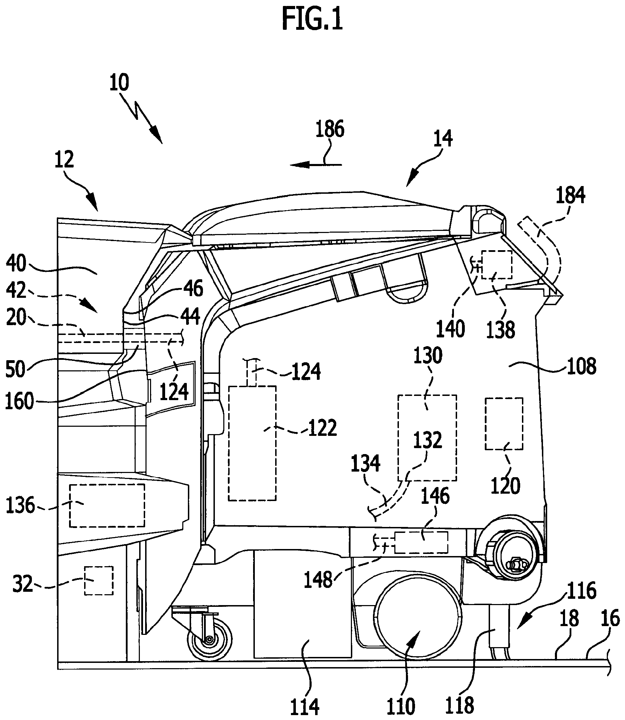

Figur 1 zeigt eine bevorzugte Ausführungsform eines erfindungsgemäßen Bodenbehandlungssystems, das mit dem Bezugszeichen 10 belegt ist und nachfolgend vereinfachend als System 10 bezeichnet wird. Das System 10 umfasst eine Andockstation 12 und eine mobile Bodenbehandlungsvorrichtung 14, nachfolgend vereinfachend als Vorrichtung 14 bezeichnet. Das System 10 ist in einer Gebrauchsstellung auf einer Aufstellfläche 16 positioniert, die gleichzeitig eine zu reinigende Bodenfläche 18 bildet.

Die Andockstation 12 umfasst eine Zufuhrleitung 20, die in nicht dargestellter Weise an ein Versorgungsnetz angeschlossen ist. Dabei handelt es sich insbesondere um ein Wasserversorgungsnetz, um die Zufuhrleitung 20 mit Wasser zu beaufschlagen. Wasser ist wie nachfolgend erläutert eine Vorratsflüssigkeit für die Vorrichtung 14 und kann auch als interne Spülflüssigkeit für diese verwendet werden.

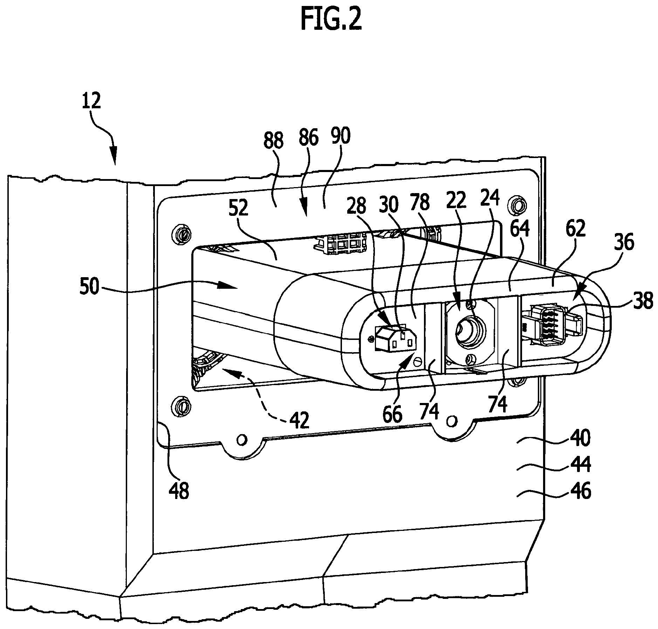

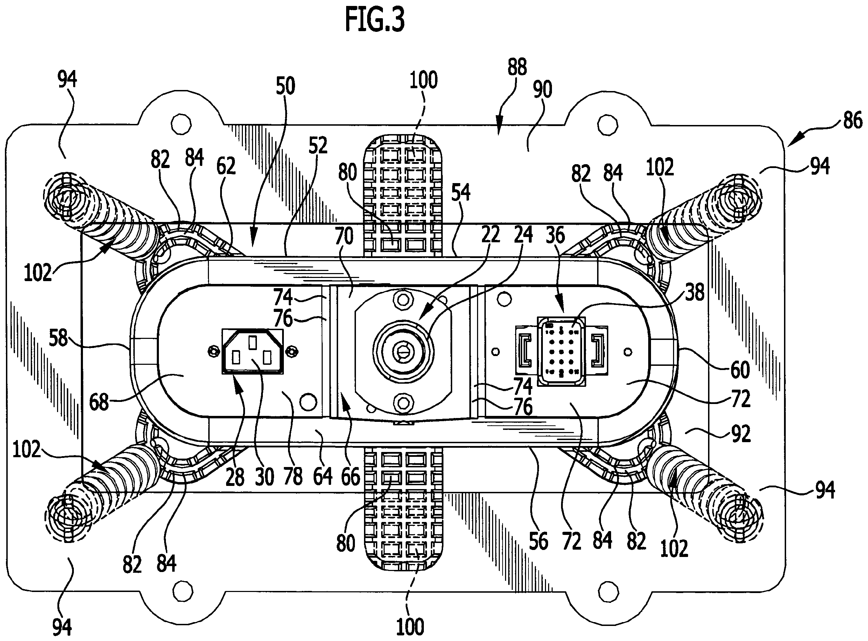

Ausgangsseitig ist an der Zufuhrleitung 20 ein Anschlusselement 22 angeordnet (Figuren 1 bis 3). Das Anschlusselement 22 ist vorliegend als Buchse 24 ausgestaltet, die ein in der Zeichnung nicht gezeigtes selbstöffnendes und selbstsperrendes Ventil aufweist.

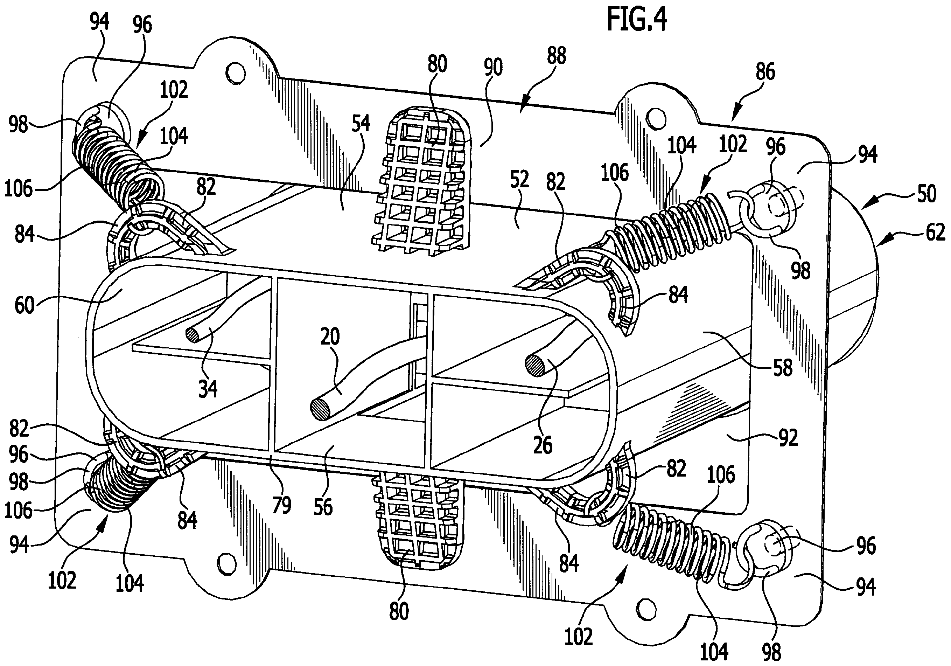

Die Andockstation 12 umfasst ferner eine Energieversorgungsleitung 26 (Figur 4), die in nicht dargestellter Weise an ein Energieversorgungsnetz zum Bereitstellen elektrischer Energie für das System 10 angeschlossen ist. Die Energieversorgungsleitung 26 weist endseitig ein Anschlusselement 28 auf, das vorliegend als Stecker 30 ausgestaltet ist. Die Energieversorgungsleitung 26 kann insbesondere für typische Netzspannungen ausgelegt sein, beispielsweise 220 V oder 110 V.

Weiter umfasst die Andockstation 12 mindestens einen elektrisch betätigbaren Aktor 32, der in Figur 1 schematisch dargestellt ist. Der Aktor 32 kann auf unterschiedliche Weisen ausgestaltet sein. Beispielsweise handelt es sich bei dem Aktor 32 um ein elektrisch betätigbares Ventil. Denkbar ist auch, dass der Aktor 32 ein Relais ist oder umfasst. Weitere Beispiele für den Aktor 32 sind ein ansteuerbarer Antrieb, zum Beispiel der Antrieb eines von der Andockstation 12 umfassten Pumpaggregates.

Den unterschiedlichen Arten möglicher Aktoren 32 gemeinsam ist, dass diese über eine Steuer- und/oder Signalleitung 34 ansteuerbar oder betätigbar sind (Figur 4). Endseitig ist an der Steuer- und/oder Signalleitung 34 ein Anschlusselement 36 angeordnet. Das Anschlusselement 36 ist vorliegend als Stecker 38 ausgestaltet. Insbesondere ist das Anschlusselement 36 ein Multipolstecker mit einer Mehrzahl von Kontaktelementen. Unterschiedliche Signale können über das jeweilige Kontaktelement übertragen und dem Aktor 32 zugeführt werden.

Die Andockstation 12 umfasst ein Gehäuse 40, das einen Aufnahmeraum 42 bildet und eine Stirnseite 44 aufweist. Die Stirnseite 44 ist der Vorrichtung 14 zugewandt, wenn dieses wie nachfolgend erläutert an die Andockstation 12 angedockt ist.

An der Stirnseite 44 ist in einer Stirnwand 46 eine Öffnung 48 des Gehäuses 40 gebildet.

Die Andockstation 12 weist eine Anschlusseinheit 50 auf, die die Anschlusselemente 22, 28 und 36 aufweist und insbesondere in einem Gehäuse 52 aufnimmt. Das Gehäuse 52 ist vorliegend von näherungsweise quaderförmiger Gestalt mit einer Deckenwand 54, einer Bodenwand 56 und diese verbindenden, gerundeten Seitenwänden 58, 60.

An einer Stirnseite 62, der Vorrichtung 14 in deren Andockstellung zugewandt, umfasst das Gehäuse 52 einen umlaufenden Rand 64, der eine gegenüber der Stirnseite 62 zurückgesetzte Vertiefung 66 einfasst. Die Vertiefung ist in drei seitlich nebeneinanderliegende Anschlussbereiche 68, 70, 72 unterteilt. Nebeneinanderliegende Anschlussbereiche 68, 70, 72 sind durch ein jeweiliges Trennelement 74, ausgestaltet als Trennwand 76, voneinander getrennt. Die Trennwände 76 verlaufen von der Deckenwand 54 zur Bodenwand 56.

"Seitlich nebeneinanderliegend" bezieht sich vorliegend auf eine Gebrauchsstellung des Systems 10, ebenso wie weitere Positions- und Orientierungsangaben wie insbesondere "oberhalb" oder "unterhalb". In der Gebrauchsstellung ist das System 10 auf der Aufstellfläche 16 positioniert, wobei das System 10 eine mit der Aufstellfläche 16 zusammenfallende Berührebene definiert. Nichteinschränkend kann angenommen werden, dass die Aufstellfläche 16 und die Berührebene horizontal ausgerichtet sind.

Das vorliegend in Flachbauweise gestaltete Gehäuse 52 erstreckt sich im Wesentlichen in einer Ebene parallel zur Berührebene. Die seitlich nebeneinanderliegenden Anschlussbereiche 68, 70, 72 sind in derselben Ebene parallel zur Berührebene angeordnet.

Die Vertiefung 66 weist einen Boden 78 auf, in den die Anschlusselemente 22, 28 und 36 eingesetzt sind, wobei jedem Anschlusselement 22, 28, 36 ein Anschlussbereich 68, 70, 72 zugeordnet ist.

Das Anschlusselement 28 (Stecker 30) ist im Anschlussbereich 68 angeordnet. Das Anschlusselement 22 (Buchse 24) ist im Anschlussbereich 70 angeordnet. Das Anschlusselement 36 (Stecker 38) ist im Anschlussbereich 72 angeordnet. Dementsprechend ist das Anschlusselement 22 der Zufuhrleitung 20, über das der Vorrichtung 14 Flüssigkeit zugeführt werden kann, zwischen dem Anschlusselement 28 für die elektrische Energieversorgung einerseits und dem Anschlusselement 36 für die elektrische Signalübertragung andererseits angeordnet. Etwaige gegenseitige Störungen oder Beeinflussungen zwischen der elektrischen Energieversorgung und der elektrischen Signalübertragung können dadurch weitestgehend vermieden werden.

An der der Stirnseite 62 gegenüberliegenden Rückseite 79 ist das Gehäuse 52 offen. Die Zufuhrleitung 20, die Energieversorgungsleitung 26 und die Steuer- und/oder Signalleitung 34 treten aus dem Gehäuse 52 aus und sind mit dem Flüssigkeitsversorgungsnetz, dem Energieversorgungsnetz und dem mindestens einen Aktor 32 verbunden.

Das Gehäuse 52 weist ferner Anschlagelemente 80 auf. Die Anschlagelemente 80 sind zungen- oder stegförmig und stehen vorliegend von der Deckenwand 54 und der Bodenwand 56 ab. Vorzugsweise erstrecken sich die Anschlagelemente 80 senkrecht zu der vom Gehäuse 52 definierten Ebene. Die Anschlagelemente 80 sind bevorzugt an das Gehäuse 52 angeformt und weisen günstigerweise einen Abstand zur Stirnseite 62 auf. Insbesondere können sie der Rückseite 79 näher gelegen sein als der Stirnseite 62.

Weiter weist das Gehäuse 52 Halteglieder 82 auf, die vorzugsweise an das Gehäuse 52 angeformt sind. Vorliegend sind vier Halteglieder 82 vorgesehen, die günstigerweise an Übergangsbereichen der Deckenwand 54 zu den Seitenwänden 58 und 60 bzw. an Übergangsbereichen der Bodenwand 56 zu den Seitenwänden 58 und 60 positioniert sind. In Längsrichtung des Gehäuses sind die Halteglieder 82 ungefähr auf Höhe der Anschlagelemente 80 positioniert. Die Halteglieder 82 definieren Ösen 84.

Zum Haltern der Anschlusseinheit 50 an der Andockstation 12 umfasst diese eine Halteeinrichtung 86. Die Halteeinrichtung 86 ist in die Öffnung 48 der Stirnwand 46 eingesetzt und mit dem Gehäuse 40 kraft- und/oder formschlüssig verbunden.

Die Halteeinrichtung 86 weist ein Halteteil 88 auf. Das Halteteil 88 ist vorliegend als Rahmen 90 ausgestaltet, der von im Wesentlichen rechteckiger Form ist. Der Rahmen 90 fasst eine Öffnung 92 ein.

An Eckbereichen 94 des Rahmens 90 sind, in den Aufnahmeraum 42 gerichtet, Halteglieder 96 festgelegt. Die Halteglieder 96 sind oder umfassen Ösen 98.

Eine vom Rahmen 90 definierte Ebene ist senkrecht zur Ebene des Gehäuses 52 ausgerichtet. Die Anschlusseinheit 50 ist so am Rahmen 90 positioniert, dass sie die Öffnung 92 durchgreift und dabei teilweise zu beiden Seiten der vom Rahmen 90 definierten Ebene angeordnet ist. Der Rahmen 90 mit der Öffnung 92 und die Anschlusseinheit 50 sind so bemessen, dass das Gehäuse 52 vom Rahmen 90 beabstandet ist und jeweilige Zwischenräume zwischen dem Rahmen 90 und den Wänden 54, 56, 58 und 60 angeordnet sind.

In einer Grundstellung, darauf wird nachfolgend noch eingegangen, können die Anschlagelemente 80 den Rahmen 90 an dessen dem Aufnahmeraum 42 zugewandten Seite kontaktieren. Der Rahmen 90 bildet daher korrespondierend zu den Anschlagelementen 80 wirkende Anschlagelemente 100. Die Anschlagelemente 80, 100 verhindern, dass die Anschlusseinheit 50 durch die Öffnung 92 hindurch in Richtung auf die Vorrichtung 14 bewegt werden kann.

Im Gegensatz dazu kann die Anschlusseinheit 50 in der entgegengesetzten Richtung relativ zum Rahmen 90 bewegt werden und dadurch teilweise in den Aufnahmeraum 42 verschoben werden. Ferner ist eine Bewegung der Anschlusseinheit 50 längs Richtungen in der vom Rahmen 90 definierten Ebene möglich. Vorliegend sind dies die Höhenrichtung senkrecht zur Berührebene und eine Bewegung in einer Richtung parallel dazu. Im Ergebnis weist die Anschlusseinheit 50 an der Andockstation 12 daher drei Freiheitsgrade der Translation auf, es ist eine Bewegung in einer Ebene parallel zur Berührebene möglich sowie längs einer Achse senkrecht zur Berührebene.

Ferner weist die Anschlusseinheit 50 an der Andockstation 12 drei Freiheitsgrade der Rotation auf. Es ist eine Verschwenkung um eine Achse quer und insbesondere senkrecht zur Berührebene möglich sowie um zwei quer und insbesondere zueinander ausgerichtete Achsen, die eine Ebene parallel zur Berührebene und quer zur Ebene des Rahmens 90 aufspannen.

Bei nicht angedockter Vorrichtung 14 ist die Anschlusseinheit 50 mittels Rückstellelementen 102 in einer Grundstellung gehalten, in der die Anschlagelemente 80, 100 miteinander koppeln. Die Rückstellelemente 102 sind ausgestaltet als elastische Elemente, insbesondere Schraubenfedern 104. Die Schraubenfedern 104 greifen an den Haltegliedern 82 des Gehäuses 52 und den Haltegliedern 96 am Rahmen 90 an und sind vorliegend auf Zug belastet. Insbesondere sind die Rückstellelemente 102 Vorspannelemente 106, die die Anschlusseinheit 50 in Richtung der Grundstellung auf den Rahmen 90 vorspannen.

Insgesamt ergibt sich dadurch eine hängende Lagerung der Anschlusseinheit 50 an der Halteeinrichtung 86, wobei die Anschlusseinheit 50 über die Schraubenfedern 104 relativ zum Rahmen 90 verspannt ist. Die Anschlusseinheit 50 ist positionsveränderlich bezüglich der Andockstation 12. Die Anschlusseinheit 50 ist in drei Raumrichtungen translatorisch und mit drei Freiheitsgraden schwenkbar hängend gelagert.

Die mobile Vorrichtung 14 ist als Bodenbehandlungsvorrichtung ausgestaltet und umfasst ein Gehäuse 108, an dessen Unterseite ein Fahrwerk 110 zum Verfahren auf der Bodenfläche 18 angeordnet ist. Am Gehäuse 108 ist ferner ein Reinigungsaggregat 114 angeordnet, um die Bodenfläche 18 zu reinigen.

Die Vorrichtung 14 ist eine Scheuersaugmaschine, und das Reinigungsaggregat 114 weist mindestens ein in der Zeichnung nicht gezeigtes drehend antreibbares bürstenförmiges oder tellerförmiges Reinigungswerkzeug auf. Ein weiteres Reinigungsaggregat ist an der Vorrichtung 14 in Gestalt einer Schmutzaufnahmevorrichtung 116 vorgesehen. Die Schmutzaufnahmevorrichtung 116 weist eine Saugleiste 118 und ein Saugaggregat 120 zum Beaufschlagen der Saugleiste 118 mit Unterdruck auf.

Die Vorrichtung 14 umfasst einen Vorratsbehälter 122 für eine Reinigungsflüssigkeit, insbesondere Wasser. Eine Befüllleitung 124 mündet in den Vorratsbehälter 122. Die Befüllleitung 124 ist endseitig mit einem Anschlusselement 126 versehen, das vorliegend als Anschlussnippel 128 ausgestaltet ist. Am Anschlussnippel 128 kann ein in der Zeichnung nicht gezeigtes selbstöffnendes und selbstsperrendes Ventil angeordnet sein.

Der Anschlussnippel 128 ist korrespondierend zur Buchse 24 ausgestaltet und kann mit dieser in einer Andockstellung der Vorrichtung 14 an der Andockstation 12 koppeln. Auf diese Weise ist eine Fluidverbindung von der Zufuhrleitung 20 über die Anschlusselemente 22, 126 und die Befüllleitung 124 zum Vorratsbehälter 122 gebildet.

Reinigungsflüssigkeit kann im Betrieb der Vorrichtung 12 auf die Bodenfläche 18 aufgebracht werden, um die Reinigungswirkung zu steigern. Mit dem Reinigungsaggregat 114 wird der Schmutz von der Bodenfläche 18 abgelöst. Die Schmutzflüssigkeit, das Gemisch aus Reinigungsflüssigkeit und abgelöstem Schmutz, kann mit der Schmutzaufnahmevorrichtung 116 aufgenommen und in einem Schmutzflüssigkeitsbehälter 130 abgeschieden werden.

Der Schmutzflüssigkeitsbehälter 130 kann eine Auslassöffnung 132 mit daran angeschlossener Auslassleitung 134 aufweisen. Über die Auslassleitung 134 kann die Schmutzflüssigkeit in einer Andockstellung der Vorrichtung 14 in einen Auffangbehälter 136 der Andockstation 12 entleert werden. Wie erwähnt, kann der mindestens eine Aktor 32 ein Antrieb für ein Ventil ausbilden, mit dem zum Beispiel die Auslassleitung 134 wahlweise gesperrt und freigegeben werden kann. Das Ansteuern des Aktors 32 kann durch eine Steuereinrichtung 138 des Systems 10 erfolgen, die vorliegend in der Vorrichtung 14 angeordnet ist.

Eine Steuer- und/oder Signalleitung 140 verbindet die Steuereinrichtung 138 mit einem Anschlusselement 142. Das Anschlusselement 142 ist vorliegend als Buchse 144 ausgestaltet, die korrespondierend zum Stecker 38 gebildet ist. In der Andockstellung der Vorrichtung 14 an der Andockstation 12 können die Anschlusselemente 36, 142 miteinander koppeln, wobei korrespondierende Kontaktelemente in elektrischen Kontakt miteinander gelangen können. Elektrische Signale können von der Steuereinrichtung 138 an den mindestens einen Aktor 32 und/oder umgekehrt übertragen werden.

Die Vorrichtung 14 umfasst ferner mindestens eine wiederaufladbare elektrische Batterie 146. An die Batterie 146 ist eine Energieversorgungsleitung 148 angeschlossen, an der endseitig ein Anschlusselement 150 angeordnet ist. Das Anschlusselement 150 ist vorliegend ausgestaltet als Buchse 152, die korrespondierend zum Stecker 30 ausgebildet ist. In der Andockstellung der Vorrichtung 14 an der Andockstation 12 können die Anschlusselemente 28, 150 miteinander koppeln. Elektrische Energie kann über die Energieversorgungsleitung 26, die Anschlusselemente 28, 150 und die Energieversorgungsleitung 148 zum Laden der mindestens einen Batterie 146 bereitgestellt werden. Es kann vorgesehen sein, dass zum Freischalten des Ladestrompfades über die Anschlusselemente 36, 142 der Signalübertragung zunächst mindestens ein Aktor 32 in Gestalt eines Relais zu betätigen ist.

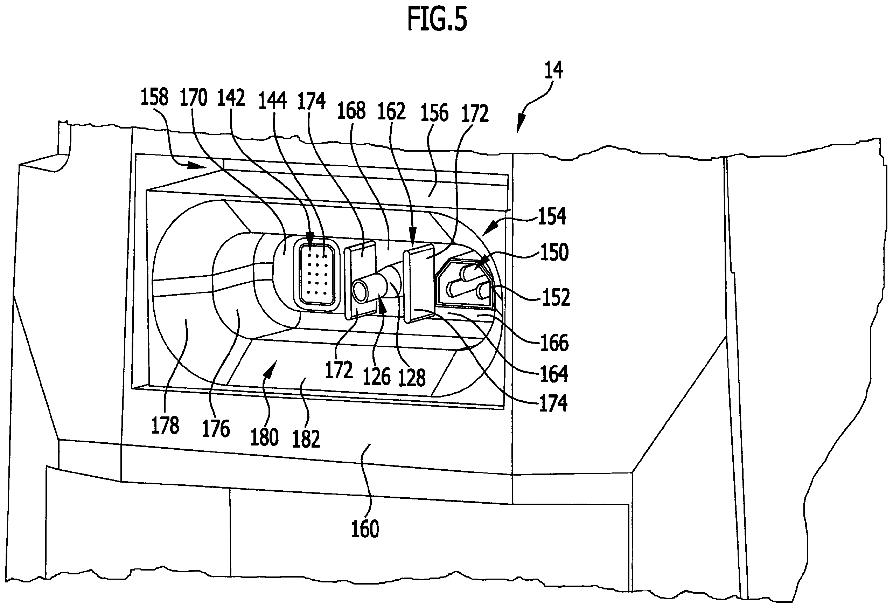

Die Vorrichtung 14 umfasst eine Anschlusseinheit 154, die die Anschlusselemente 126, 142 und 150 umfasst. Die Anschlusseinheit 154 weist ein Gehäuse 156 auf, in der die Anschlusselemente 126, 142 und 150 aufgenommen sind. Das Gehäuse 156 ist unbeweglich an der Vorrichtung 14 festgelegt. Dabei ist das Gehäuse 156 in einer Aufnahme 158 positioniert, die an einer Vorderseite 160 der Vorrichtung 14 gebildet ist. "Vorderseite" bezieht sich auf eine Längs- oder Hauptbewegungsrichtung der Vorrichtung 14. In der Andockstellung der Vorrichtung 14 ist die Vorderseite 160 der Stirnseite 44 der Andockstation 12 zugewandt (Figuren 1, 5 und 6).

Stirnseitig ist am Gehäuse 156 eine Vertiefung 162 gebildet, die einen Boden 164 aufweist. Die Vertiefung 162 ist in seitlich nebeneinanderliegende Anschlussbereiche 166, 168, 170 unterteilt. Zwischen nebeneinander positionierten Anschlussbereichen 166, 168 und 170 ist ein jeweiliges Trennelement 172 angeordnet. Die Trennelemente 172 sind als Trennwände 174 ausgestaltet.

Die Anschlussbereiche 166, 168 und 170 sind jeweils einem der Anschlusselemente 126, 142 und 150 zugeordnet, die in den Boden 164 eingesetzt sind.

Wie bei der Anschlusseinheit 50 ist bei der Anschlusseinheit 154 das Anschlusselement 126 für die Flüssigkeitsversorgung zwischen dem Anschlusselement 142 für die elektrische Signalübertragung einerseits und dem Anschlusselement 150 für die elektrische Energieversorgung andererseits angeordnet, wobei die Anschlusselemente 126, 142 und 150 seitlich nebeneinander in einer Ebene parallel zur Berührebene positioniert sind.

Die Vertiefung 162 ist von einer umlaufenden Wand 176 begrenzt. In Richtung der Vorderseite 16 geht die umlaufende Wand 176 über in einen Rand 178. Der Rand 178 bildet eine Ausrichteinrichtung 180 an der Anschlusseinheit 154, über welche Ausrichteinrichtung 180 sich die Anschlusseinheiten 50, 154, und dadurch die korrespondierenden Anschlusselemente, beim Andocken der Vorrichtung 14 an die Andockstation 12 auf bessere Weise finden können. Der Rand 178 umfasst eine Zentrierschräge 182, die im Winkel zu einer Ebene parallel zur Berührebene ausgerichtet ist. Die Anschlusseinheit 154 weist dadurch am Rand 178 eine näherungsweise trichterförmige Gestalt auf.

Die Vorrichtung 14 kann eine selbstfahrende und selbstlenkende Bodenbehandlungsvorrichtung sein (ein Bodenreinigungsroboter), mit der eine autonome Reinigung der Bodenfläche 18 durchgeführt werden kann. Die Steuereinrichtung 138 kann die Bewegungen der Vorrichtung 14 unter Ansteuerung eines Antriebes für das Fahrwerk 110 und auch die Reinigungsaggregate ansteuern.

Alternativ oder ergänzend kann vorgesehen sein, dass die Vorrichtung 14 handgeführt ist und von einer Bedienperson über die Bodenfläche 18 geführt wird. Es kann ein Antrieb für das Fahrwerk 110 vorgesehen sein. Die Bedienperson kann über eine in Figur 1 schematisch dargestellte Handhabe 184, die insbesondere eine Griffeinrichtung umfasst, auf die Vorrichtung 14 einwirken.

Zum Befüllen des Vorratsbehälters 122, Laden der mindestens einen Batterie 146 und/oder Entleeren des Schmutzflüssigkeitsbehälters 130 kann die Vorrichtung 14 an die Andockstation 12 angedockt werden. Selbsttätig oder unter Führung durch die Bedienperson wird die Vorrichtung 14 in Richtung auf die Andockstation 12 verfahren. Idealerweise ist die Vorrichtung 14 dabei in einer Andockrichtung 186 ausgerichtet. Die Andockrichtung 186 verläuft parallel zur Berührebene, und bei Übereinstimmung der Bewegungsrichtung der Vorrichtung 14 mit der Andockrichtung 186 fluchten die Anschlusselemente 22 und 126, 28 und 150 sowie 36 und 142 und können passgenau aneinandergefügt werden. Dabei nimmt die Anschlusseinheit 50 an der Halteeinrichtung 86 zunächst die Grundstellung ein, in der die Anschlagelemente 80 und 100 zusammenwirken und die Schraubenfedern 104 die Anschlusseinheit 50 mit einer auf den Rahmen 90 gerichteten Vorspannkraft beaufschlagen.

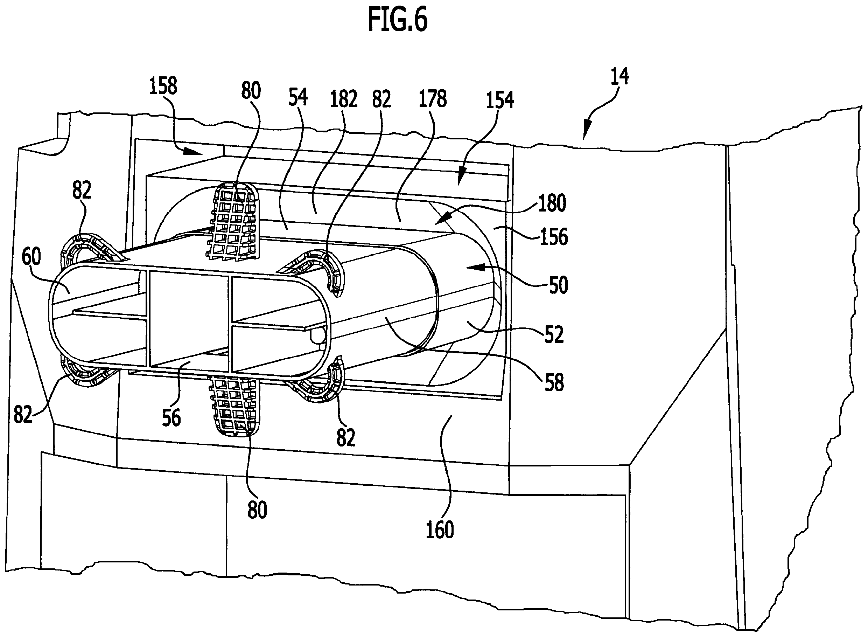

Beim Andocken der Vorrichtung 14 können die Anschlusseinheiten 50 und 154 passgenau an- und insbesondere ineinander gefügt werden. Die Vertiefung 162 ist so bemessen, dass die Anschlusseinheit 50 darin formschlüssig eingreifen kann (Figur 6). Dadurch ist ein korrekter Sitz der Anschlusseinheiten 50, 154 sichergestellt, der zudem den korrekten Sitz der Anschlusselemente 22 und 126, 28 und 150 sowie 36 und 142 sicherstellt. Die umlaufende Wand 176 liegt an den Wänden 54, 56, 58 und 60 an.

Eine verbrauchbare Komponente, insbesondere Wasser oder elektrische Energie, kann der Vorrichtung 14 zuverlässig zugeführt werden. Zusätzlich ist eine Übertragung von elektrischen Schalt- und/oder Steuersignalen zwischen der Vorrichtung 14 und der Andockstation 12 möglich.

Die Trennwände 76 und 174 können die Anschlusselemente 28, 36, 142 und 150 beispielsweise vor unbeabsichtigterweise an den Anschlusselementen 22, 126 austretender Flüssigkeit schützen, wodurch Kurzschlüsse vermieden werden können. Geringfügige Mengen von Flüssigkeit können beispielsweise auch beim Andocken oder Abdocken der Vorrichtung 14 an den Anschlusselementen 22, 126 austreten.

Die exakte Ausrichtung der Vorrichtung 14 längs der Andockrichtung 186 kann Schwierigkeiten bereiten und erfordert insbesondere bei einer selbstfahrenden und selbstlenkenden Vorrichtung 14 einen beträchtlichen Aufwand an die Sensorik. Um sicherzustellen, dass die Anschlusseinheiten 50, 154 auch dann zum Verbinden der Anschlusselemente 22, 28, 36, 126, 142 und 150 positionsgenau aneinandergefügt werden können, ist die vorstehend erläuterte hängende Lagerung der positionsveränderlichen Anschlusseinheit 50 vorgesehen.

Weicht die Bewegungsrichtung der Vorrichtung 14 beim Andocken von der Andockrichtung 186 ab, kann die Anschlusseinheit 50 durch die positionsveränderliche Halterung an der Halteeinrichtung 86 relativ zur Andockstation 12 und relativ zur Anschlusseinheit 154 bewegt werden. Insbesondere kann die Bewegung bei nicht allzu großer Abweichung der Bewegungsrichtung von der Andockrichtung 186 dadurch bewirkt werden, dass der Rand 178 den Rand 64 kontaktiert. Die Anschlusseinheit 50 kann relativ zum Rahmen 90 in drei Raumrichtungen der Translation und drei Richtungen der Rotation verschoben bzw. verschwenkt werden. Die Bewegung der Anschlusseinheit 50 erfolgt entgegen der Rückstellkraft der Rückstellelemente 102 in den Aufnahmeraum 42 hinein.

Aufgrund der Zentrierschräge 182 des Randes 178 kann sich die Anschlusseinheit 50 relativ zur Anschlusseinheit 154 so positionieren, dass beide Anschlusseinheiten 50, 154 positionsgenau zueinander ausgerichtet sind und aneinandergefügt werden. Die Anschlusselemente 22 und 126, 28 und 150 sowie 36 und 142 können auch in diesem Fall miteinander koppeln, bei dem die Bewegungsrichtung der Vorrichtung 14 nicht exakt mit der Andockrichtung 186 übereinstimmt.

In letzterem Fall, und auch bei Verfahren der Vorrichtung 14 exakt längs der Andockrichtung 186, wird die Anschlusseinheit 50 beim Andocken in den Aufnahmeraum 42 verschoben und/oder verschwenkt. Die Schraubenfedern 104 üben die Rückstellkraft auf das Gehäuse 52 aus, um eine feste Kopplung der Anschlusselemente 22 und 126, 28 und 150 sowie 36 und 142 aneinander sicherzustellen.

Zum Abdocken bewegt sich die Vorrichtung 14 weg von der Andockstation 12, und der Eingriff der Anschlusseinheit 50 in die Anschlusseinheit 154 wird aufgehoben. Unter der Rückstellkraft der Rückstellelemente 102 kehrt die Anschlusseinheit 50 wieder in die Grundstellung zurück, in der die Anschlagelemente 80 den Rahmen 90 kontaktieren.

### Bezugszeichenliste:

- 10: Bodenbehandlungssystem
- 12: Andockstation
- 14: Bodenbehandlungsvorrichtung
- 16: Aufstellfläche
- 18: Bodenfläche
- 20: Zufuhrleitung
- 22: Anschlusselement
- 24: Buchse
- 26: Energieversorgungsleitung
- 28: Anschlusselement
- 30: Stecker
- 32: Aktor
- 34: Steuer- und/oder Signalleitung
- 36: Anschlusselement
- 38: Stecker
- 40: Gehäuse
- 42: Aufnahmeraum
- 44: Stirnseite
- 46: Stirnwand
- 48: Öffnung
- 50: Anschlusseinheit
- 52: Gehäuse
- 54: Deckenwand
- 56: Bodenwand
- 58: Seitenwand
- 60: Seitenwand
- 62: Stirnseite
- 64: Rand
- 66: Vertiefung
- 68: Anschlussbereich
- 70: Anschlussbereich
- 72: Anschlussbereich
- 74: Trennelement
- 76: Trennwand
- 78: Boden
- 79: Rückseite
- 80: Anschlagelement
- 82: Halteglied
- 84: Öse
- 86: Halteeinrichtung
- 88: Halteteil
- 90: Rahmen
- 92: Öffnung
- 94: Eckbereich
- 96: Halteglied
- 98: Öse
- 100: Anschlagelement
- 102: Rückstellelement
- 104: Schraubenfeder
- 106: Vorspannelement
- 108: Gehäuse
- 110: Fahrwerk
- 114: Reinigungsaggregat
- 116: Schmutzaufnahmevorrichtung
- 118: Saugleiste
- 120: Saugaggregat
- 122: Vorratsbehälter
- 124: Befüllleitung
- 126: Anschlusselement
- 128: Anschlussnippel
- 130: Schmutzflüssigkeitsbehälter
- 132: Auslassöffnung
- 134: Auslassleitung
- 136: Auffangbehälter
- 138: Steuereinrichtung
- 140: Steuer- und/oder Signalleitung
- 142: Anschlusselement
- 144: Buchse
- 146: Batterie
- 148: Energieversorgungsleitung
- 150: Anschlusselement
- 152: Buchse
- 154: Anschlusseinheit
- 156: Gehäuse
- 158: Aufnahme
- 160: Vorderseite
- 162: Vertiefung
- 164: Boden
- 166: Anschlussbereich
- 168: Anschlussbereich
- 170: Anschlussbereich
- 172: Trennelement
- 174: Trennwand
- 176: umlaufende Wand
- 178: Rand
- 180: Ausrichteinrichtung
- 182: Zentrierschräge
- 184: Handhabe
- 186: Andockrichtung

## Patentansprüche

1. Bodenbehandlungssystem, umfassend eine mobile Bodenbehandlungsvorrichtung (14) und eine Andockstation (12) für diese, wobei der Bodenbehandlungsvorrichtung (14) von der Andockstation (12) eine verbrauchbare Komponente zuführbar ist und/oder ein Signal zwischen der Andockstation (12) und der Bodenbehandlungsvorrichtung (14) übertragbar ist, wobei die Bodenbehandlungsvorrichtung (14) und die Andockstation (12) jeweils mindestens ein Anschlusselement (22, 28, 36, 126, 142, 150) aufweisen und korrespondierende Anschlusselemente (22, 28, 36, 126, 142, 150) der Andockstation (12) und der Bodenbehandlungsvorrichtung (14) in einer Andockstellung derselben miteinander koppeln, wobei das Bodenbehandlungssystem (10) mindestens eine Anschlusseinheit (50) an der Andockstation (12) und/oder an der Bodenbehandlungsvorrichtung (14) umfasst, die deren mindestens eine Anschlusselement (22, 28, 36) aufweist und die positionsveränderlich an der Andockstation (12) oder an der Bodenbehandlungsvorrichtung (14) gehalten ist, wobei die Andockstation (12) und die Bodenbehandlungsvorrichtung (14) jeweils eine, mindestens ein Anschlusselement (22, 28, 36, 126, 142, 150) aufweisende Anschlusseinheit (50, 154) umfassen, wobei die Anschlusseinheiten (50, 154) in der Andockstellung der Bodenbehandlungsvorrichtung (14) an- oder ineinander fügbar sind, **dadurch gekennzeichnet, dass** die Anschlusselemente (22, 28, 36, 126, 142, 150) der Andockstation (12) und der Bodenbehandlungsvorrichtung (14) Anschlusselemente (22, 126) an einer Zufuhrleitung (20) der Andockstation (12) und an einer Befüllleitung (124) der Bodenbehandlungsvorrichtung (14) umfassen, die in der Andockstellung dichtend miteinander verbunden sind, wobei die Bodenbehandlungsvorrichtung (14) einen Vorratsbehälter (122) für eine Flüssigkeit aufweist, der in der Andockstellung über die Zufuhrleitung (20) und die Befüllleitung (124) befüllbar ist.

2. Bodenbehandlungssystem nach Anspruch 1, **dadurch gekennzeichnet, dass** zumindest eines der Folgenden gilt:
- die mindestens eine Anschlusseinheit (50) ist zumindest in einer Ebene verschiebbar und um eine Achse quer zur Ebene schwenkbar an der Andockstation (12) oder der Bodenbehandlungsvorrichtung (14) gehalten;
- die mindestens eine Anschlusseinheit (50) ist mit zumindest zwei Freiheitsgraden der Translation, vorzugsweise drei Freiheitsgraden der Translation, positionsveränderlich gehalten;
- die mindestens eine Anschlusseinheit (50) ist mit zumindest einem Freiheitsgrad der Rotation, vorzugsweise drei Freiheitsgraden der Rotation, positionsveränderlich gehalten.

3. Bodenbehandlungssystem nach einem der voranstehenden Ansprüche, **dadurch gekennzeichnet, dass** zumindest eines der Folgenden gilt:
- eine der Anschlusseinheiten (50, 154) greift in der Andockstellung der Bodenbehandlungsvorrichtung (14) formschlüssig in die andere Anschlusseinheit (50, 154) ein;
- eine der Anschlusseinheiten (154) ist unbeweglich an der Bodenbehandlungsvorrichtung (14) oder an der Andockstation (12) festgelegt, wobei vorzugsweise die Anschlusseinheit (50) an der Andockstation (12) positionsveränderlich gehalten ist und die Anschlusseinheit (154) an der Bodenbehandlungsvorrichtung (14) unbeweglich festgelegt ist.

4. Bodenbehandlungssystem nach einem der voranstehenden Ansprüche, **dadurch gekennzeichnet, dass** zumindest eines der Folgenden gilt:
- die mindestens eine Anschlusseinheit (50) weist ein Gehäuse (52) auf, in dem das mindestens eine Anschlusselement (22, 28, 36) der Andockstation (12) oder der Bodenbehandlungsvorrichtung (14) aufgenommen ist;
- das Bodenbehandlungssystem (10) umfasst zum Haltern der mindestens einen Anschlusseinheit (50) an der Andockstation (12) oder an der Bodenbehandlungsvorrichtung (14) eine Halteeinrichtung (86), wobei die Halteeinrichtung (86) vorzugsweise mindestens ein Rückstellelement (102) aufweist, entgegen dessen Rückstellkraft die mindestens eine Anschlusseinheit (50) beim Andocken der Bodenbehandlungsvorrichtung (14) an die Andockstation (12) von einer Grundstellung, die die Anschlusseinheit (50) bei nicht angedockter Bodenbehandlungsvorrichtung (14) einnimmt, ausrückbar ist.

5. Bodenbehandlungssystem nach Anspruch 4, **dadurch gekennzeichnet, dass** zumindest eines der Folgenden gilt:
- das mindestens eine Rückstellelement (102) ist ein Vorspannelement (106), das die mindestens eine Anschlusseinheit (50) mit einer Vorspannkraft in der Grundstellung vorspannt, wobei an der Halteeinrichtung (86) und an der Anschlusseinheit (50) zusammenwirkende Anschlagelemente (80, 100) angeordnet sind, über die sich die Anschlusseinheit (50) in der Grundstellung an der Halteeinrichtung (86) abstützt, wobei vorzugsweise mindestens ein Anschlagelement (80) an ein Gehäuse (52) der mindestens einen Anschlusseinheit (50) angeformt ist;
- das mindestens eine Rückstellelement (102) ist elastisch verformbar ausgestaltet;
- das mindestens eine Rückstellelement (102) ist oder umfasst eine insbesondere auf Zug beanspruchte Schraubenfeder (104);
- die Halteeinrichtung (86) weist eine Mehrzahl von Haltegliedern (96) direkt oder indirekt an der Andockstation (12) oder an der Bodenbehandlungsvorrichtung (14) festgelegt auf, wobei eine Mehrzahl von Rückstellelementen (102) vorgesehen ist, die an der mindestens einen Anschlusseinheit (50) angreifen und diese relativ zu den Haltegliedern (96) verspannen.

6. Bodenbehandlungssystem nach Anspruch 5, **dadurch gekennzeichnet, dass** zumindest eines der Folgenden gilt:
- die Rückstellelemente (102) sind die mindestens eine Anschlusseinheit (50) umgebend positioniert;
- an einem Gehäuse (52) der mindestens einen Anschlusseinheit (50) sind angeformte Halteglieder (82) vorgesehen, an denen die Rückstellelemente (102) angreifen;
- die Halteeinrichtung (86) umfasst oder bildet einen Rahmen (90), an dem die Halteglieder (96) angeordnet sind und der eine Öffnung (92) einfasst, in der die mindestens eine Anschlusseinheit (50) angeordnet ist oder welche Öffnung (92) die mindestens eine Anschlusseinheit (50) durchgreift.

7. Bodenbehandlungssystem nach Anspruch 6, **dadurch gekennzeichnet, dass** die mindestens eine Anschlusseinheit (50) in der Grundstellung über den Rahmen (90) und eine Stirnseite (44) der Andockstation (12) oder der Bodenbehandlungsvorrichtung (14) in Richtung der Bodenbehandlungsvorrichtung (14) oder in Richtung der Andockstation (12) hervorragt und/oder dass die Andockstation (12) oder die Bodenbehandlungsvorrichtung (14) ein Gehäuse (40) mit einer Gehäuseöffnung (48) aufweist und dass der Rahmen (90) in die Gehäuseöffnung (48) eingesetzt ist.

8. Bodenbehandlungssystem nach einem der Ansprüche 4 bis 7, **dadurch gekennzeichnet, dass** die mindestens eine Anschlusseinheit (50) an der Halteeinrichtung (86) hängend gelagert ist, insbesondere dass die Halteeinrichtung (86) einen die mindestens eine Anschlusseinheit (50) einfassenden Rahmen (90) umfasst oder ausbildet, wobei die Anschlusseinheit (50) mittels elastischer Elemente, die an einem Gehäuse (52) der Anschlusseinheit (50) angreifen, relativ zum Rahmen (90) verspannt ist.

9. Bodenbehandlungssystem nach einem der voranstehenden Ansprüche, **dadurch gekennzeichnet, dass** die Andockstation (12) und die Bodenbehandlungsvorrichtung (14) jeweils mindestens zwei Anschlusselemente (22, 28, 36, 126, 142, 150) umfassen und dass die mindestens eine positionsveränderliche Anschlusseinheit (50) zwei oder mehr Anschlusselemente (22, 28, 36) aufweist, wobei vorzugsweise zumindest eines der Folgenden gilt:
- die Anschlusselemente (22, 28, 36) sind seitlich nebeneinander an der mindestens einen Anschlusseinheit (50) positioniert;
- die mindestens eine Anschlusseinheit (50) weist einem jeweiligen Anschlusselement (22, 28, 36) zugeordnet einen Anschlussbereich (68, 70, 72) auf, wobei die Anschlussbereiche (68, 70, 72) durch mindestens ein Trennelement (74) voneinander getrennt sind, wobei das mindestens eine Trennelement (74) bevorzugt eine Trennwand (76) zwischen den Anschlussbereichen (68, 70, 72) ist oder umfasst.

10. Bodenbehandlungssystem nach einem der voranstehenden Ansprüche, **dadurch gekennzeichnet, dass** die mindestens eine Anschlusseinheit (50) alle Anschlusselemente (22, 28, 36) aufweist, über die eine verbrauchbare Komponente von der Andockstation (12) an die Bodenbehandlungsvorrichtung (14) zuführbar ist und/oder dass das mindestens eine Anschlusselement (22, 28, 36) der mindestens einen positionsveränderlichen Anschlusseinheit (50) hinter dessen Stirnseite (62) zurückbleibt, welche Stirnseite (62) der Bodenbehandlungsvorrichtung (14) oder der Andockstation (12) zugewandt ist.

11. Bodenbehandlungssystem nach einem der voranstehenden Ansprüche, **dadurch gekennzeichnet, dass** die Anschlusselemente (22, 28, 36, 126, 142, 150) der Andockstation (12) und der Bodenbehandlungsvorrichtung (14) ferner zumindest eines der Folgenden umfassen:
- Anschlusselemente (28, 150) einer elektrischen Energieversorgung, die in der Andockstellung elektrisch miteinander koppeln, um der Bodenbehandlungsvorrichtung (14) elektrische Energie von der Andockstation (12) zuzuführen;
- Anschlusselemente (36, 142) für eine elektrische Signalübertragung, die in der Andockstellung elektrisch miteinander koppeln zum Übermitteln von Schalt- und/oder Spannungssignalen zwischen der Andockstation (12) und der Bodenbehandlungsvorrichtung (14).

12. Bodenbehandlungssystem nach Anspruch 11, **dadurch gekennzeichnet, dass** das Bodenbehandlungssystem (10) alle der vorstehend genannten Anschlusselemente (22, 28, 36, 126, 142, 150) umfasst, wobei die Anschlusselemente (22, 126) der Zufuhrleitung (20) und der Befüllleitung (124) zwischen den Anschlusselementen (28, 150) der elektrischen Energieversorgung und den Anschlusselementen (36, 142) für die elektrische Signalübertragung positioniert sind.

13. Bodenbehandlungssystem nach einem der voranstehenden Ansprüche, **dadurch gekennzeichnet, dass** das Bodenbehandlungssystem (10) eine Ausrichteinrichtung (180) umfasst zum Ausrichten der mindestens einen Anschlusseinheit (50) an der Andockstation (12) oder an der Bodenbehandlungsvorrichtung (14) zum jeweiligen mindestens einen Anschlusselement (126, 142, 150) an der Bodenbehandlungsvorrichtung (14) oder an der Andockstation (12), wobei vorzugsweise zumindest eines der Folgenden gilt:
- die Ausrichteinrichtung (180) ist an einer Anschlusseinheit (154) angeordnet oder von dieser gebildet, insbesondere einer Anschlusseinheit (154) der Bodenbehandlungsvorrichtung (14);
- die Ausrichteinrichtung (180) weist eine im Winkel zur einer Andockrichtung (186) ausgerichtete Zentrierschräge (182) auf.

14. Bodenbehandlungssystem nach einem der voranstehenden Ansprüche, **dadurch gekennzeichnet, dass** zumindest eines der Folgenden gilt:
- die Bodenbehandlungsvorrichtung (14) ist selbstfahrend und selbstlenkend;
- die Bodenbehandlungsvorrichtung (14) ist handgeführt;
- die Bodenbehandlungsvorrichtung (14) ist eine Bodenreinigungsvorrichtung, und weist mindestens ein Reinigungsaggregat (114) zum Reinigen einer Bodenfläche (18) auf.

## Claims

1. A floor treatment system comprising a mobile floor treatment device (14) and a docking station (12) for the latter, wherein a consumable component can be supplied to the floor treatment device (14) from the docking station (12) and/or a signal can be transmitted between the docking station (12) and the floor treatment device (14), wherein the floor treatment device (14) and the docking station (12) each have at least one connection element (22, 28, 36, 126, 142, 150) and corresponding connection elements (22, 28, 36, 126, 142, 150) of the docking station (12) and the floor treatment device (14) couple with one another in a docking position of the latter, wherein the floor treatment system (10) comprises at least one connection unit (50) at the docking station (12) and/or at the floor treatment device (14), which connection unit (50) has the at least one connection element (22, 28, 36) thereof and is held in a position-variable manner at the docking station (12) or at the floor treatment device (14), wherein the docking station (12) and the floor treatment device (14) each comprise a connection unit (50, 154) having at least one connection element (22, 28, 36, 126, 142, 150), wherein the connection units (50, 154) are joinable to or into one another in the docking position of the floor treatment device (14), **characterised in that** the connection elements (22, 28, 36, 126, 142, 150) of the docking station (12) and the floor treatment device (14) comprise connection elements (22, 126) at a supply line (20) of the docking station (12) and at a filling line (124) of the floor treatment device (14), which connection elements (22, 126) are connected to one another in a sealing manner in the docking position, wherein the floor treatment device (14) has a storage container (122) for a fluid, which is fillable in the docking position via the supply line (20) and the filling line (124).

2. A floor treatment system according to claim 1, **characterised in that** at least one of the following applies:
- the at least one connection unit (50) is held at the docking station (12) or the floor treatment device (14) so as to be displaceable in at least one plane and pivotable about an axis transverse to the plane;
- the at least one connection unit (50) is held in a position-variable manner with at least two degrees of freedom of translation, preferably three degrees of freedom of translation;
- the at least one connection unit (50) is held in a position-variable manner with at least one degree of freedom of rotation, preferably three degrees of freedom of rotation.

3. A floor treatment system according to any one of the preceding claims, **characterised in that** at least one of the following applies:
- one of the connection units (50, 154) engages into the other connection unit (50, 154) in a form-locking manner in the docking position of the floor treatment device (14);
- one of the connection units (154) is fixed on the floor treatment device (14) or on the docking station (12) in an immovable manner, wherein preferably the connection unit (50) is held on the docking station (12) in a position-variable manner and the connection unit (154) on the floor treatment device (14) is fixed in an immovable manner.

4. A floor treatment system according to any one of the preceding claims, **characterised in that** at least one of the following applies:
- the at least one connection unit (50) has a housing (52) in which there is received the at least one connection element (22, 28, 36) of the docking station (12) or of the floor treatment device (14);
- the floor treatment system (10) comprises a holding arrangement (86) for fixing the at least one connection unit (50) at the docking station (12) or at the floor treatment device (14), wherein the holding arrangement (86) preferably has at least one restoring element (102) against the restoring force of which the at least one connection unit (50) is upon docking of the floor treatment device (14) with the docking station (12) releasable from a base position which the connection unit (50) assumes when the floor treatment device (14) is not docked.

5. A floor treatment system according to claim 4, **characterised in that** at least one of the following applies:
- the at least one restoring element (102) is a pre-stressing element (106) which prestresses the at least one connection unit (50) with a pre-stressing force in the base position, wherein co-operating stop elements (80, 100) are arranged at the holding arrangement (86) and at the connection unit (50), via which stop elements (80, 100) the connection unit (50) is supported on the holding arrangement (86) in the base position, wherein preferably at least one stop element (80) is formed on a housing (52) of the at least one connection element (50);
- the at least one restoring element (102) is elastically deformable;
- the at least one restoring element (102) is or comprises a helical spring (104) which is in particular under tension;
- the holding arrangement (86) has a plurality of holding members (96) which are directly or indirectly fixed on the docking station (12) or on the floor treatment device (14), wherein a plurality of restoring elements (102) are provided and engage the at least one connection unit (50) and brace the latter relative to the holding members (96).

6. A floor treatment system according to claim 5, **characterised in that** at least one of the following applies:
- the restoring elements (102) are positioned to surround the at least one connection unit (50);
- holding members (82) are provided and are formed on a housing (52) of the at least one connection unit (50), the restoring elements (102) engaging these holding members (82);
- the holding arrangement (86) comprises or forms a frame (90) on which the holding members (96) are arranged and which encases an opening (92) in which the at least one connection unit (50) is arranged or through which opening (92) passes the at least one connection unit (50).

7. A floor treatment system according to claim 6, **characterised in that** the at least one connection unit (50) projects in the base position beyond the frame (90) and an end face (44) of the docking station (12) or the floor treatment device (14) in the direction of the floor treatment device (14) or in the direction of the docking station (12) and/or **in that** the docking station (12) or the floor treatment device (14) has a housing (40) with a housing opening (48) and **in that** the frame (90) is inserted in the housing opening (48).

8. A floor treatment system according to any one of claims 4 to 7, **characterised in that** the at least one connection unit (50) is mounted in a suspended manner on the holding arrangement (86), in particular **in that** the holding arrangement (86) comprises or forms a frame (90) enclosing the at least one connection unit (50), wherein the connection unit (50) is braced relative to the frame (90) by means of elastic elements which engage a housing (52) of the connection unit (50).

9. A floor treatment system according to any one of the preceding claims, **characterised in that** the docking station (12) and the floor treatment device (14) each comprise at least two connection elements (22, 28, 36, 126, 142, 150) and **in that** the at least one position-variable connection unit (50) has two or more connection elements (22, 28, 36), wherein preferably at least one of the following applies:
- the connection elements (22, 28, 36) are positioned laterally side by side at the at least one connection unit (50);
- the at least one connection unit (50) has a connection region (68, 70, 72) associated with a respective connection element (22, 28, 36), wherein the connection regions (68, 70, 72) are divided from one another by at least one dividing element (74), wherein the at least one dividing element (74) preferably is or comprises a dividing wall (76) between the connection regions (68, 70, 72).

10. A floor treatment system according to any one of the preceding claims, **characterised in that** the at least one connection unit (50) has all connection elements (22, 28, 36) via which a consumable component can be supplied from the docking station (12) to the floor treatment device (14) and/or **in that** the at least one connection element (22, 28, 36) of the at least one position-variable connection unit (50) remains behind the end face (62) of the latter, which end face (62) faces the floor treatment device (14) or the docking station (12).

11. A floor treatment system according to any one of the preceding claims, **characterised in that** the connection elements (22, 28, 36, 126, 142, 150) of the docking station (12) and the floor treatment device (14) furthermore comprise at least one of the following:
- connection elements (28, 150) of an electrical energy supply, which couple with one another electrically in the docking position in order to supply electrical energy from the docking station (12) to the floor treatment device (14);
- connection elements (36, 142) for an electrical signal transmission, which couple with one another electrically in the docking position for the transmission of switching and/or voltage signals between the docking station (12) and the floor treatment device (14).

12. A floor treatment system according to claim 11, **characterised in that** the floor treatment system (10) comprises all of the above-mentioned connection elements (22, 28, 36, 126, 142, 150), wherein the connection elements (22, 126) of the supply line (20) and the filling line (124) are positioned between the connection elements (28, 150) of the electrical energy supply and the connection elements (36, 142) for the electrical signal transmission.

13. A floor treatment system according to any one of the preceding claims, **characterised in that** the floor treatment system (10) comprises an alignment arrangement (180) for aligning the at least one connection unit (50) at the docking station (12) or at the floor treatment device (14) with the respective at least one connection element (126, 142, 150) at the floor treatment device (14) or at the docking station (12), wherein preferably at least one of the following applies:
- the alignment arrangement (180) is arranged at a connection unit (154) or is formed by the latter, in particular a connection unit (154) of the floor treatment device (14);
- the alignment arrangement (180) has a centering incline (182) oriented at an angle to a docking direction (186).

14. A floor treatment system according to any one of the preceding claims, **characterised in that** at least one of the following applies:
- the floor treatment device (14) is self-propelled and self-steering;
- the floor treatment device (14) is hand-guided;
- the floor treatment device (14) is a floor cleaning device and has at least one cleaning unit (114) for cleaning a floor surface (18).

## Revendications

1. Système de traitement des sols, comprenant un dispositif de traitement des sols mobile (14) et une station d'accueil (12) pour celui-ci, où un composant consommable peut être apporté au dispositif de traitement des sols (14) depuis la station d'accueil (12) et/ou un signal peut être transmis entre la station d'accueil (12) et le dispositif de traitement des sols (14), où le dispositif de traitement des sols (14) et la station d'accueil (12) présentent chacun au moins un élément de raccordement (22, 28, 36, 126, 142, 150) et des éléments de raccordement (22, 28, 36, 126, 142, 150) correspondants de la station d'accueil (12) et du dispositif de traitement des sols (14) s'accouplent entre eux dans une position d'accueil de ceux-ci, où le système de traitement des sols (10) comprend au moins une unité de raccordement (50) sur la station d'accueil (12) et/ou sur le dispositif de traitement des sols (14), qui présente leur au moins un élément de raccordement (22, 28, 36) et qui est maintenue sur la station d'accueil (12) ou sur le dispositif de traitement des sols (14) d'une manière modifiable en position, où la station d'accueil (12) et le dispositif de traitement des sols (14) comprennent chacun une unité de raccordement (50, 154) présentant au moins un élément de raccordement (22, 28, 36, 126, 142, 150), où les unités de raccordement (50, 154) peuvent être jointes l'une à l'autre ou l'une dans l'autre dans la position d'accueil du dispositif de traitement des sols (14), **caractérisé en ce que** les éléments de raccordement (22, 28, 36, 126, 142, 150) de la station d'accueil (12) et du dispositif de traitement des sols (14) comprennent sur une ligne d'apport (20) de la station d'accueil (12) et sur une ligne de remplissage (124) du dispositif de traitement des sols (14) des éléments de raccordement (22, 126) qui sont reliés l'un à l'autre de manière étanche dans la position d'accueil, où le dispositif de traitement des sols (14) présente un réservoir (122) pour un liquide qui, dans la position d'accueil, peut être rempli par le biais de la ligne d'apport (20) et de la ligne de remplissage (124).

2. Système de traitement des sols selon la revendication 1, **caractérisé en ce qu'**au moins l'un des suivants s'applique:
- la au moins une unité de raccordement (50) peut être déplacée au moins dans un plan et est maintenue sur la station d'accueil (12) ou le dispositif de traitement des sols (14) en pouvant pivoter autour d'un axe transversalement au plan;
- la au moins une unité de raccordement (50) est maintenue de manière modifiable en position avec au moins deux degrés de liberté de translation, de préférence trois degrés de liberté de translation;
- la au moins une unité de raccordement (50) est maintenue de manière modifiable en position avec au moins un degré de liberté de rotation, de préférence trois degrés de liberté de rotation.

3. Système de traitement des sols selon l'une des revendications précédentes, **caractérisé en ce qu'**au moins l'un des suivants s'applique:
- l'une des unités de raccordement (50, 154) s'engage dans la position d'accueil du dispositif de traitement des sols (14) par assemblage de forme dans l'autre unité de raccordement (50, 154);
- l'une des unités de raccordement (154) est fixée de manière immobile au dispositif de traitement des sols (14) ou à la station d'accueil (12), où de préférence l'unité de raccordement (50) est maintenue de manière modifiable en position sur la station d'accueil (12) et l'unité de raccordement (154) est fixée de manière immobile au dispositif de traitement des sols (14).

4. Système de traitement des sols selon l'une des revendications précédentes, **caractérisé en ce qu'**au moins l'un des suivants s'applique:
- la au moins une unité de raccordement (50) présente un boîtier (52) dans lequel le au moins un élément de raccordement (22, 28, 36) de la station d'accueil (12) ou du dispositif de traitement des sols (14) est logé;
- le système de traitement des sols (10) comprend un dispositif de maintien (86) pour maintenir la au moins une unité de raccordement (50) sur la station d'accueil (12) ou sur le dispositif de traitement des sols (14), où le dispositif de maintien (86) présente de préférence au moins un élément de rappel (102) contre la force de rappel duquel la au moins une unité de raccordement (50) peut être séparée depuis une position de base que l'unité de raccordement (50) adopte lorsque le dispositif de traitement des sols (14) n'est pas accueilli, lors de l'accueil du dispositif de traitement des sols (14) sur la station d'accueil (12).

5. Système de traitement des sols selon la revendication 4, **caractérisé en ce qu'**au moins l'un des suivants s'applique:
- le au moins un élément de rappel (102) est un élément de précontrainte (106) qui précontraint dans la position de base la au moins une unité de raccordement (50) avec une force de précontrainte, où des éléments de butée (80, 100) coopérants sont disposés sur le dispositif de maintien (86) et sur l'unité de raccordement (50), par l'intermédiaire desquels l'unité de raccordement (50) s'appuie sur le dispositif de maintien (86) dans la position de base, où de préférence au moins un élément de butée (80) est formé d'une pièce sur un boîtier (52) de la au moins une unité de raccordement (50);
- le au moins un élément de rappel (102) est conçu de manière élastiquement déformable;
- le au moins un élément de rappel (102) est ou comprend un ressort hélicoïdal (104) sollicité en particulier en traction;
- le dispositif de maintien (86) présente une pluralité d'organes de maintien (96) fixés directement ou indirectement à la station d'accueil (12) ou au dispositif de traitement des sols (14), où il est prévu une pluralité d'éléments de rappel (102) qui s'appliquent sur la au moins une unité de raccordement (50) et haubanent celle-ci par rapport aux organes de maintien (96).

6. Système de traitement des sols selon la revendication 5, **caractérisé en ce qu'**au moins l'un des suivants s'applique:
- les éléments de rappel (102) sont positionnés en entourant la au moins une unité de raccordement (50);
- sur un boîtier (52) de la au moins une unité de raccordement (50) sont prévus des organes de maintien (82) formés d'une pièce sur lesquels les éléments de rappel (102) s'appliquent;
- le dispositif de maintien (86) comprend ou forme un cadre (90) sur lequel sont agencés les organes de maintien (96) et qui entoure une ouverture (92) dans laquelle est agencée la au moins une unité de raccordement (50) ou la au moins une unité de raccordement (50) traverse ladite ouverture (92).

7. Système de traitement des sols selon la revendication 6, **caractérisé en ce que**, dans la position de base, la au moins une unité de raccordement (50) fait saillie du cadre (90) et d'un côté frontal (44) de la station d'accueil (12) ou du dispositif de traitement des sols (14), en direction du dispositif de traitement des sols (14) ou en direction de la station d'accueil (12) et/ou **en ce que** la station d'accueil (12) ou le dispositif de traitement des sols (14) présente un boîtier (40) avec une ouverture de boîtier (48) et **en ce que** le cadre (90) est inséré dans l'ouverture de boîtier (48).

8. Système de traitement des sols selon l'une des revendications 4 à 7, **caractérisé en ce que** la au moins une unité de raccordement (50) est montée suspendue sur le dispositif de maintien (86), en particulier **en ce que** le dispositif de maintien (86) comprend ou forme un cadre (90) entourant la au moins une unité de raccordement (50), où l'unité de raccordement (50) est haubanée par rapport au cadre (90) au moyen d'éléments élastiques qui s'appliquent sur un boîtier (52) de l'unité de raccordement (50).

9. Système de traitement des sols selon l'une des revendications précédentes, **caractérisé en ce que** la station d'accueil (12) et le dispositif de traitement des sols (14) comprennent chacun au moins deux éléments de raccordement (22, 28, 36, 126, 142, 150) et **en ce que** la au moins une unité de raccordement modifiable en position (50) présente deux ou plusieurs éléments de raccordement (22, 28, 36), où de préférence au moins l'un des suivants s'applique:
- les éléments de raccordement (22, 28, 36) sont positionnés côte à côte les uns à côté des autres sur la au moins une unité de raccordement (50);
- la au moins une unité de raccordement (50) présente une zone de raccordement (68, 70, 72) associée à un élément de raccordement (22, 28, 36) respectif, où les zones de raccordement (68, 70, 72) sont séparées les unes des autres par au moins un élément de séparation (74), où le au moins un élément de séparation (74) est ou comprend de préférence une paroi de séparation (76) entre les zones de raccordement (68, 70, 72).

10. Système de traitement des sols selon l'une des revendications précédentes, **caractérisé en ce que** la au moins une unité de raccordement (50) présente tous les éléments de raccordement (22, 28, 36) par le biais desquels un composant consommable peut être apporté de la station d'accueil (12) au dispositif de traitement des sols (14) et/ou **en ce que** le au moins un élément de raccordement (22, 28, 36) de la au moins une unité de raccordement modifiable en position (50) reste derrière son côté frontal (62), lequel côté frontal (62) est tourné vers le dispositif de traitement des sols (14) ou la station d'accueil (12).

11. Système de traitement des sols selon l'une des revendications précédentes, **caractérisé en ce que** les éléments de raccordement (22, 28, 36, 126, 142, 150) de la station d'accueil (12) et du dispositif de traitement des sols (14) comprennent en outre au moins l'un des suivants:
- des éléments de raccordement (28, 150) d'une alimentation en énergie électrique qui se couplent électriquement dans la position d'accueil pour apporter au dispositif de traitement des sols (14) de l'énergie électrique depuis la station d'accueil (12);
- des éléments de raccordement (36, 142) pour une transmission de signaux électriques, qui se couplent électriquement dans la position d'accueil pour transmettre des signaux de commutation et/ou de tension entre la station d'accueil (12) et le dispositif de traitement des sols (14).

12. Système de traitement des sols selon la revendication 11, **caractérisé en ce que** le système de traitement des sols (10) comprend tous les éléments de raccordement (22, 28, 36, 126, 142, 150) cités précédemment, où les éléments de raccordement (22, 126) de la ligne d'apport (20) et de la ligne de remplissage (124) sont positionnés entre les éléments de raccordement (28, 150) de l'alimentation en énergie électrique et les éléments de raccordement (36, 142) pour la transmission de signaux électriques.

13. Système de traitement des sols selon l'une des revendications précédentes, **caractérisé en ce que** le système de traitement des sols (10) comprend un dispositif d'alignement (180) pour aligner la au moins une unité de raccordement (50) sur la station d'accueil (12) ou sur le dispositif de traitement des sols (14) avec le au moins un élément de raccordement (126, 142, 150) respectif sur le dispositif de traitement des sols (14) ou sur la station d'accueil (12), où de préférence au moins l'un des suivants s'applique:
- le dispositif d'alignement (180) est agencé sur une unité de raccordement (154) ou formé par celle-ci, en particulier une unité de raccordement (154) du dispositif de traitement des sols (14);
- le dispositif d'alignement (180) présente un biseau de centrage (182) aligné selon un angle par rapport à une direction d'accueil (186).

14. Système de traitement des sols selon l'une des revendications précédentes, **caractérisé en ce qu'**au moins l'un des suivants s'applique:
- le dispositif de traitement des sols (14) est automoteur et autoguidé;
- le dispositif de traitement des sols (14) est guidé manuellement;
- le dispositif de traitement des sols (14) est un dispositif de nettoyage des sols et présente au moins une unité de nettoyage (114) pour nettoyer une surface de sol (18).
